# FASCICULE DE BREVET EUROPEEN

(11) **EP 0 908 729 B1**
(45) Date de publication et mention de la délivrance du brevet: **08.09.2004**
(21) Numéro de dépôt: 98402516.3
(22) Date de dépôt: 09.10.1998
(51) Int. Cl.: G01P 3/44, G01P 3/487

(54) **Palier encastré avec capteur intégré**
Lager mit integriertem Sensor in Lagerbuchse
Bushed bearing with integrated sensor

(30) Priorité: 10.10.1997 US 63466 P
(43) Date de publication de la demande: 14.04.1999
(73) Titulaire: SNR ROULEMENTS, F-74000 Annecy (FR)
(72) Inventeur: Brauer, Michael C., 75116 Paris (FR); Hanson, John C., 75116 Paris (FR); Lacroix, Mark E., 75116 Paris (FR); Santos, John A., 75116 Paris (FR)
(74) Mandataire: Ballot, Paul

(56) Documents cités:
- EP-A- 0 137 270
- EP-A- 0 357 870
- EP-A- 0 498 298
- EP-A- 0 652 438
- DE-A- 4 326 391
- DE-A- 4 339 894
- FR-A- 2 668 561
- GB-A- 2 251 694
- US-A- 5 310 266

## Description

La présente invention concerne de manière générale un palier à alignement automatique fixé à l'intérieur d'un logement et plus particulièrement un palier encastré à alignement automatique muni d'un capteur intégré pour détecter la vitesse ou la position d'un axe rotatif.

On dispose dans le commerce de divers paliers munis de capteurs intégrés à des fins de mesure de paramètres de palier ou de système tels que la vitesse ou la position d'un axe tournant à l'intérieur du palier.

Le document EP-A-0137270 divulgue un palier encastré à alignement automatique équipé d'un capteur étant fixé au couverde d'un logement. Le dispositif de ce document nécessite une cible de capteur d'une construction particulière.

Le document EP-A-0357870 divulgue un palier encastré équipé d'un capteur comprenant des conducteurs électriques flexibles étant fixés sur le logement, ledit palier n'étant pas à alignement automatique.

Le document FR-A-2668561 divulgue un palier encastré équipé d'un capteur monté sur un dispositif d'étanchéité, ce dernier étant fixé sur la bague extérieure, ledit palier n'étant pas à alignement automatique.

Cependant, un problème rencontré avec ces conceptions est le manque de protection des composants du capteur contre les vibrations, la contamination par des produits chimiques ou de l'eau, contre la poussière ou les débris, les chocs, etc. Ceci est notamment vrai lorsque les capteurs et les circuits électriques qui leur sont associés sont miniaturisés et ne sont pas robustes.

Bien que ces paliers munis de capteurs intégrés fonctionnent correctement dans de nombreuses applications, ils peuvent être inappropriés dans des conditions d'utilisation difficiles pour des applications nécessitant un palier à alignement automatique robuste. Dans ces applications, le capteur, les composants de circuit ou le câblage peuvent être endommagés. Ces composants de capteur peuvent également être endommagés dans des applications moins exigeantes si le palier à alignement automatique est soumis à une manipulation sans précaution, soit avant soit pendant une installation difficile par exemple.

Ce qui précède illustre les limites connues qui existent dans les présents dispositifs et procédés actuels. Ainsi, il apparaît qu'il serait avantageux de prévoir un palier à alignement automatique encastré plus robuste muni d'un capteur intégré afin de surmonter une ou plusieurs des limites exposées ci-dessus. Par conséquent, on propose une variante appropriée comprenant certaines caractéristiques décrites plus complètement ci-après.

Selon un aspect de l'invention, on atteint cet objectif en proposant un palier encastré à alignement automatique comprenant un logement présentant un alésage le long d'un axe, une bague extérieure et une bague intérieure pouvant tourner par rapport à la bague extérieure. La bague extérieure présente une surface extérieure convexe de manière sphérique montée à l'intérieur de l'alésage du logement si bien que la bague extérieure peut ne pas être alignée par rapport à l'axe de l'alésage. Une cible de capteur est montée sur la bague intérieure et un capteur est monté à proximité de la cible sur un dispositif d'étanchéité fixé sur la bague extérieure. Un conducteur électrique flexible est connecté au capteur pour permettre l'émission de signaux par le capteur, une partie du conducteur électrique flexible étant fixe par rapport au logement.

Les caractéristiques précédentes ainsi que d'autres apparaîtront à la lecture de la description détaillée de l'invention considérée en conjonction avec les figures des dessins d'accompagnement.
La figure 1 est une vue représentative d'un palier encastré à alignement automatique de type à support muni d'un capteur intégré illustrant la présente invention ;
la figure 2 est une vue en coupe transversale d'un palier encastré à alignement automatique de type à bride muni d'un capteur intégré illustrant la présente invention ; et
la figure 3 est une vue en coupe transversale agrandie d'une partie du palier encastré à alignement automatique muni d'un capteur intégré illustré sur la figure 1 ou 2.

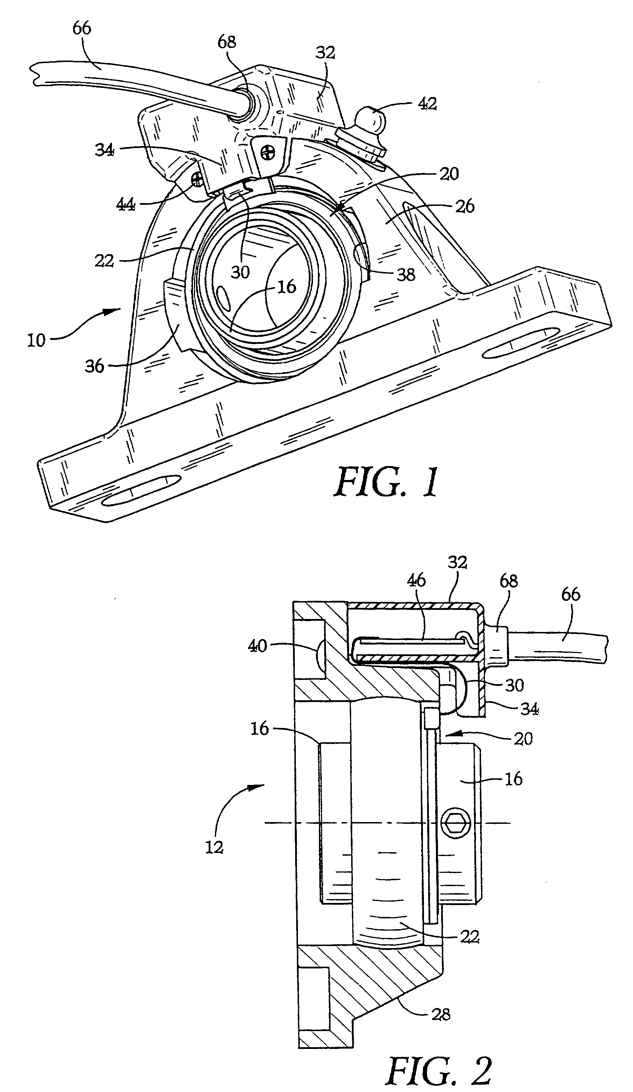

En référence maintenant aux dessins, les figures 1 à 3 illustrent respectivement des paliers 10 et 12 encastrés à alignement automatique de type à support et à bride, semblables aux paliers encastrés actuels mais comprenant un capteur intégré et des composants associés. Une cible de capteur 14 est située à l'intérieur du palier (c'est-à-dire entre les dispositifs d'étanchéité) et est fixée à et tourne avec une bague intérieure rotative 16. Un capteur 18 est également situé à l'intérieur du palier mais est fixé sur une surface intérieure du dispositif d'étanchéité 20 (ou à l'intérieur du dispositif d'étanchéité 20) de telle sorte que le capteur 18 est à proximité immédiate de la cible de capteur 14. Le dispositif d'étanchéité 20 est fixé sur une bague extérieure 22 présentant une surface extérieure convexe de manière sphérique montée en pivotement à l'intérieur d'un alésage 24 du logement 26 ou 28.

Etant donné que la bague intérieure 16 tourne par rapport à la bague extérieure 22, la cible de capteur 14 passe devant le capteur 18 et un signal électrique est produit par le capteur 18 correspondant à la position de la cible de capteur 14. Le signal produit par le capteur 18 est émis à l'extérieur du palier au moyen d'un ou plusieurs conducteurs électriques comprenant un câble flexible 30. Le câble flexible 30 est écarté de la ligne médiane du palier pour être acheminé radialement vers un boîtier de protection 32. Le boîtier de protection 32 est petit, de telle sorte qu'il ne gêne pas l'accès aux boulons qui peuvent être utilisés pour fixer les paliers 10 ou 12 encastrés à alignement automatique de type à support ou à bride sur un appareil.

Le boîtier de protection 32 comprend une partie formant "museau" 34 qui fait saillie radialement vers l'intérieur en direction de la ligne médiane de l'alésage 24 du logement de telle sorte que la partie de museau 34 recouvre les conducteurs électriques du câble flexible 30. De cette manière, les conducteurs électriques sont protégés des impacts physiques. Si le boîtier de protection est réalisé dans un matériau électriquement conducteur, on prend également certaines mesures de protection contre les interférences électromagnétiques. La partie de museau 34 est formée de telle sorte que le boîtier de protection 32 puisse être réalisé par moulage ou coulage sous la forme d'une pièce unique ou de pièces multiples et de telle sorte que la partie de museau 34 ne gêne pas l'oscillation des bagues intérieure et extérieure 16 et 22 par rapport au logement 26 ou 28.

De préférence, le boîtier de protection 32 est formé de telle sorte qu'il ne sorte pas de la zone d'empreinte du logement de type à bride 28. En conséquence, le palier encastré à alignement automatique de type à bride peut être installé partout où est fixé le palier encastré classique de type à bride. Dans le cas du palier encastré à alignement automatique de type à support, la petite taille du boîtier de protection 32 réduit l'empiètement sur l'équipement environnant. La longueur du câble flexible 30 est suffisante pour que le boîtier de protection 32 puisse être fixé sur le logement 26 ou 28 une fois les bagues intérieure et extérieure 16 et 22 installées dans le logement et pour que le câble flexible 30 puisse être équipé d'un système de limitation des contraintes.

Le boîtier de protection 32 peut être monté dans différentes positions. Cependant, avec le logement 26 de type à support, on préfère que le boîtier de protection 32 soit situé à environ 90 degrés par rapport à la ligne médiane des fentes de chargement 36 et 38 qui sont utilisées pour installer la bague extérieure 22. Cet emplacement est préféré afin de diminuer les risques de pincement ou d'endommagement du câble flexible 30 au cours de l'installation lorsque les bagues intérieure et extérieure 16 et 22 (le dispositif d'étanchéité 20 et le câble flexible 30 étant fixés) sont introduites dans la cavité des fentes de chargement 36 et 38 avec une orientation perpendiculaire au plan du logement 26 et tournent ensuite dans la direction parallèle au plan du logement 26. Ainsi, après la rotation dans leur position finale des bagues intérieure et extérieure 16 et 22, le câble flexible 30 se trouve dans la position douze ou six heures, les fentes de chargement 36 et 38 étant situées dans les positions trois et neuf heures.

Dans le cas du palier 28 de type à bride, le boîtier de protection 32 peut être conçu pour être fixé par de petites vis ou éléments de fixation 40 qui sont insérés par l'arrière du logement 28. Cette construction peut réduire l'accès au capteur 18 et aux composants associés. Dans les paliers encastrés de type à support ou à bride, on peut utiliser un graisseur 42 comme élément de fixation pour fixer ou arrimer en partie le boîtier de protection 32 sur le logement 26 ou 28. Dans le cas du palier 26 de type à support, le boîtier de protection 32 peut être fixé par l'arrière, comme illustré avec le logement à bride 28 ou par de petites vis 44 filetées dans la partie avant du logement 26 comme le montre la figure 1 ou par une combinaison de ces éléments de fixation.

Pour obtenir une construction étanche aux produits chimiques ou à l'eau, le boîtier de protection 32 peut être rempli d'un matériau de protection tel que de la résine époxy, du silicone ou un matériau similaire. Afin de garantir que le palier encastré à alignement automatique peut être nettoyé à la vapeur et ne présente pas de cavités qui puissent favoriser le développement de moisissures, le boîtier de protection 32 peut être fixé avec un adhésif ou avec un matériau d'étanchéité permettant de remplir tous les espaces vides situés entre le boîtier de protection 32 et les surfaces en accouplement du logement respectif 26 ou 28. Le boîtier de protection 32 peut également être formé par moulage ou coulage pour faire partie intégrante du logement 26 ou 28.

Pour certaines applications dans lesquelles il est souhaitable d'installer un palier encastré à alignement automatique muni d'un capteur intégré à la place d'un palier encastré à alignement automatique standard sans capteur intégré, il peut y avoir un peu d'espace supplémentaire pour les composants associés au capteur. Le palier encastré à alignement automatique à capteur intégré de la présente invention peut être réalisé à l'aide de bagues intérieure ou extérieure qui ne sont pas plus grandes que celles de paliers encastrés à alignement automatique standard dépourvus de capteurs. Le montage du capteur 18 sur la surface intérieure ou à l'intérieur du dispositif d'étanchéité 20, le câble flexible 30 sortant du dispositif d'étanchéité 20, permet d'obtenir un ensemble à volume réduit et une conception robuste avec le capteur 18 situé à l'intérieur de la partie hermétique du palier.

Les circuits destinés au traitement des signaux électriques émis par le capteur 18 peuvent être disposés sur une carte de circuit 46, illustrée sur la figure 2, qui peut être une carte de circuit classique ou peut être une carte de circuit imprimé flexible dont une certaine longueur intégrée de carte de circuit flexible sert de câble flexible 30. La carte de circuit flexible peut présenter une ou plusieurs couches de circuits et peut être constituée d'un polymère tel que le Capton, avec des rubans de circuit en cuivre. Une épaisseur typique pour une carte de circuit flexible de ce type est comprise entre 0,005 et 0,011 pouce.

Le capteur 18 peut comprendre des composants de capteur à sorties soudés sur une petite carte de circuit fixée à l'intérieur du dispositif d'étanchéité de palier 20, la petite carte de circuit imprimé étant ensuite connectée au câble 30 pour acheminer les signaux électriques en provenance des composants de capteur. Le capteur 18 peut comprendre par exemple deux composants à effet Hall 50 combinés avec des circuits électroniques connus afin de produire des signaux de vitesse, de direction et/ou de position.

La construction intégrée décrite ci-dessus peut être utilisée pour obtenir un profil plus mince pour le boîtier de protection 32 et permettre à au moins une partie des circuits de traitement d'être placés à l'intérieur du dispositif d'étanchéité 20, formant un seul tenant avec le capteur 18. La construction intégrée supprime les connexions entre les différents composants, ce qui offre un avantage supplémentaire. La carte de circuit flexible peut être maintenue de manière rigide à l'intérieur du dispositif d'étanchéité de palier 20 en reliant la carte de circuit flexible sur une surface rigide 48 montée sur l'intérieur du dispositif d'étanchéité de palier 20. Etant donné que la carte de circuit flexible sort du dispositif d'étanchéité 20, elle sert de câble flexible 30. Cette construction intégrée facilite l'installation, l'alignement et l'ajustement de la bague de palier extérieure 22 à l'intérieur du logement 26 ou 28 sans endommager les divers composants. La carte de circuit flexible peut être placée dans un manchon ou peut être surmoulée avec une enveloppe protectrice en caoutchouc pour fournir une protection supplémentaire.

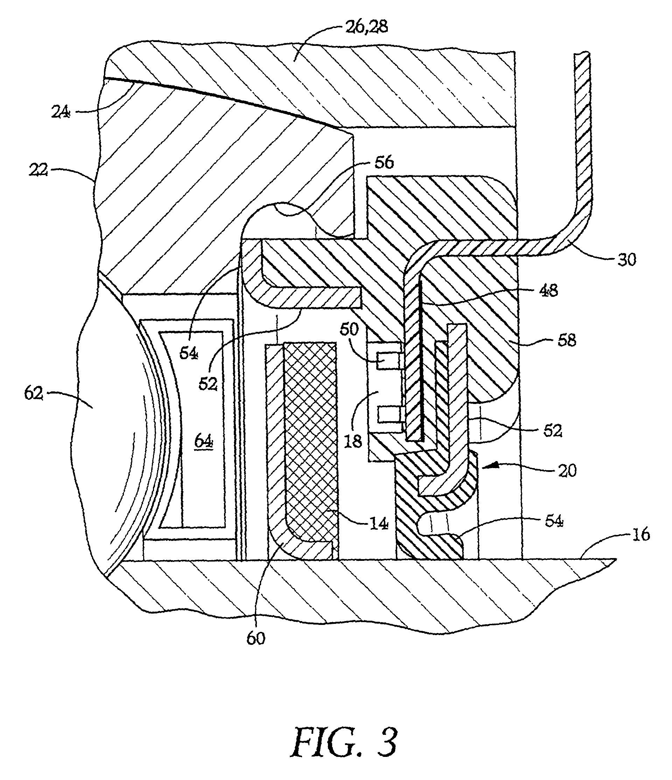

Le dispositif d'étanchéité 20 peut comprendre une armature métallique 52 sous la forme d'un anneau avec une lèvre d'étanchéité élastomère surmoulée 54 mettant en prise la bague intérieure 16. L'armature 52 présente une découpe formant fenêtre, comme l'illustre la figure 3, ce qui permet au câble flexible 30 de passer à travers le dispositif d'étanchéité 20 en direction de la partie intérieure du palier, c'est-à-dire entre les dispositifs d'étanchéité de palier. L'armature 52 peut présenter une partie de diamètre extérieur 70 enroulée, comme le montre la figure, pour être fixée à l'intérieur d'une gorge 56 de l'anneau extérieur par une mise en prise par encliquetage ou enclenchement, comme cela est souvent le cas sur les dispositifs d'étanchéité de palier ou par d'autres moyens de retenue connus.

Comme le montre la figure 3, un cache en matériau polymère 58 peut être moulé sur la fenêtre d'étanchéité de l'armature 52 afin de prévoir un système de limitation des contraintes exercées sur le câble flexible 30 et diriger le câble flexible 30 radialement vers l'extérieur et ensuite axialement vers extérieur. Le câble 30 s'incurve ensuite radialement vers l'extérieur lorsqu'il passe dans la partie de museau 34, comme le montre la figure 2, jusqu'au boîtier de protection 32. Le cache en matériau polymère moulé 58 entoure également le capteur 18 et maintient le capteur 18 pour le positionner précisément par rapport à la cible de capteur 14. La cible de capteur 14 peut être un anneau magnétique fixé sur une armature en acier 60 par exemple, qui est montée sur la bague intérieure 16, comme le montre la figure.

Bien que la bague intérieure 16 et la bague extérieure 22 puissent être séparées par des billes 62 à l'intérieur d'un dispositif de retenue 64, comme le montre la figure, d'autres types de paliers peuvent être utilisés avec la présente invention. En variante, la bague intérieure 16 et la bague extérieure 22 peuvent être séparées par des galets ou d'autres éléments de roulement ou par un manchon ou peuvent présenter des surfaces de coulissement d'un seul tenant formant un palier lisse par exemple.

Le boîtier de protection 32 sert de boîte de jonction reliant le câble flexible 30 à un câble de transmission robuste 66 et de fixation pour le câble de fixation robuste 66, pourvu de préférence d'un système de limitation des contraintes 68. Il faut comprendre que, si on utilise la construction intégrée ci-dessus, la carte de circuit 46 peut être formée sur une carte de circuit flexible et peut être insérée à l'intérieur du dispositif d'étanchéité, formant un seul tenant avec le capteur 18. Dans ce cas, la taille du boîtier de protection 32 pourrait être réduite mais resterait sous la forme d'une jonction montée dans le logement reliant le câble flexible 30 et le câble de transmission robuste 66.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

## Revendications

1. Palier encastré à alignement automatique, comprenant :
- un logement (26 ou 28) présentant un alésage (24) le long d'un axe ;
- une bague intérieure (16) et une bague extérieure (22) pouvant tourner par rapport à l'anneau intérieur (16), la bague extérieure (22) dont une surface extérieure convexe de manière sphérique est fixée à l'intérieur de l'alésage (24) du logement (26) ou (28) de telle sorte que la bague extérieure (22) puisse ne pas être alignée par rapport à l'axe de l'alésage (24) ;
- une cible de capteur (14) fixée sur la bague intérieure (16) ;
- un dispositif d'étanchéité (20) fixé sur la bague extérieure (22) ;
- un capteur (18) monté sur le dispositif d'étanchéité (20) et à proximité de la cible,
ledit palier comprenant également au moins un conducteur électrique flexible connecté électriquement au capteur (18) pour permettre l'émission de signaux par le capteur (18), une partie du conducteur électrique flexible étant fixée sur le logement (26 ou 28).

2. Palier encastré à alignement automatique selon la revendication 1, **caractérisé en ce que** le conducteur flexible est obtenu à partir d'une certaine longueur intégrée de carte de circuit flexible.

3. Palier encastré à alignement automatique selon la revendication 2, **caractérisé en ce que** la carte de circuit flexible formant conducteur comprend des circuits électriques.

4. Palier encastré à alignement automatique selon la revendication 1, **caractérisé en ce qu'**il comprend en outre un boîtier de protection (32) fixé sur le logement (26 ou 28) et confère une protection au conducteur flexible et permet de fixer le conducteur flexible par rapport au logement (26 ou 28).

5. Palier encastré à alignement automatique selon la revendication 4, **caractérisé en ce que** le boîtier de protection (32) comprend des circuits connectés électriquement au conducteur flexible.

6. Palier encastré à alignement automatique selon la revendication 4, **caractérisé en ce qu'**il comprend en outre un câble de transmission (66) connecté électriquement au conducteur flexible.

7. Palier encastré à alignement automatique selon la revendication 5, **caractérisé en ce qu'**il comprend en outre un câble de transmission (66) connecté électriquement aux circuits.

8. Palier encastré à alignement automatique selon la revendication 4, **caractérisé en ce que** le boîtier de protection (32) comprend une partie de museau (34) s'étendant radialement au-dessus de la bague extérieure (22) de telle sorte que la partie de museau (34) confère une certaine protection au conducteur flexible.

9. Palier encastré à alignement automatique selon la revendication 1, **caractérisé en ce que** le dispositif d'étanchéité (20) comprend une armature métallique (52) montée sur la bague extérieure (22), l'armature métallique (52) ménageant une ouverture par laquelle passe le conducteur électrique flexible et **en ce que** le dispositif d'étanchéité (20) comprend également une partie élastomère superposée sur l'armature métallique (52), créant ainsi une lèvre d'étanchéité (54) mettant en prise la bague intérieure (16).

10. Palier encastré à alignement automatique selon la revendication 9, **caractérisé en ce qu'**il comprend en outre un cache en matériau polymère (58) moulé sur l'ouverture pratiquée dans l'armature métallique (52) et au moins une partie du capteur de telle sorte que le cache en matériau polymère (58) stabilise le capteur.

11. Palier encastré à alignement automatique selon la revendication 1, **caractérisé en ce que** le capteur (18) comprend au moins un composant à effet Hall (50).

12. Palier encastré à alignement automatique selon la revendication 1, **caractérisé en ce que** le logement (26 ou 28) est un logement de palier de type à support (26) avec une partie d'anse centrale faisant office d'alésage et pourvu de deux parties de fixation s'étendant vers l'extérieur depuis la partie d'anse centrale pour fixer le logement (26) de telle sorte que l'alésage (24) soit aligné parallèlement à une surface de support.

13. Palier encastré à alignement automatique selon la revendication 1, **caractérisé en ce que** le logement (26 ou 28) est un logement de palier de type à bride (28) avec une partie centrale servant d'alésage et pourvu d'au moins deux parties de fixation s'étendant vers l'extérieur depuis la partie centrale pour fixer le logement (28) de telle sorte que l'alésage (24) soit aligné perpendiculairement à une surface de support.

14. Palier encastré à alignement automatique selon la revendication 1, **caractérisé en ce que** la cible de capteur (14) comprend un anneau magnétique fixé sur une armature métallique (60) qui est monté sur la bague intérieure (16).

15. Palier encastré à alignement automatique selon la revendication 1, **caractérisé en ce qu'**il comprend en outre des éléments de roulement positionnés entre la bague intérieure (16) et la bague extérieure (22).

## Patentansprüche

1. Selbsteinstellendes Einbaulager bestehend aus:
- einem Lagergehäuse (26 oder 28) mit einer Bohrung (24) längs einer Achse,
- einem Innenring (16) und einem Außenring (22), der im vergleich zum Innenring (16) drehen kann; eine sphärisch-konvexe Außenfläche des Außenrings (22) ist derart im Innern der Bohrung (24) des Gehäuses (26) oder (28) befestigt, dass der Außenring (22) gegenüber der Achse der Bohrung (24) nicht eingestellt werden kann;
- einem am Innenring (16) befestigtes Messfühler-Target (14);
- einer am Außenring (22) befestigte Abdichtungsvorrichtung (20);
- einem auf der Abdichtungsvorrichtung (20) in Targetnähe montierten Messfühler (18).
Das besagte Lager besitzt weiterhin mindestens einen flexiblen elektrischen Leiter, der elektrisch mit dem Messfühler (18) angeschlossen ist, um die Ausgabe von Signalen durch den Messfühler (18) zu ermöglichen, ein Teil des flexiblen elektrischen Leiters ist dabei am Lagergehäuse (26 oder 28) befestigt.

2. Selbsteinstellendes Einbaulager nach Patentanspruch 1, dahingehend **gekennzeichnet**, dass der flexible Leiter durch eine bestimmte integrierte Länge einer flexiblen Leiterkarte gebildet ist.

3. Selbsteinstellendes Einbaulager nach Patentanspruch 2, dahingehend **gekennzeichnet,** dass die flexible Leiterkarte, die den Leiter bildet, zwei elektrische Stromkreise besitzt.

4. Selbsteinstellendes Einbaulager nach Patentanspruch 1, dahingehend **gekennzeichnet**, dass ein auf dem Lagergehäuse (26 oder 28) montiertes Schutzgehäuse (32) vorhanden ist, das den flexiblen Leiter schützt und ermöglicht, diesen am Lagergehäuse (26 oder 28) zu befestigen.

5. Selbsteinstellendes Einbaulager nach Patentanspruch 4, dahingehend **gekennzeichnet,** dass das Schutzgehäuse (32) mit dem flexiblen Leiter elektrisch verbundene Stromkreise besitzt.

6. Selbsteinstellendes Einbaulager nach Patentanspruch 4, dahingehend **gekennzeichnet,** dass darüber hinaus ein Übertragungskabel (66) vorhanden ist, das elektrisch mit dem flexiblen Leiter verbunden ist.

7. Selbsteinstellendes Einbaulager nach Patentanspruch 5, dahingehend **gekennzeichnet,** dass darüber hinaus ein Übertagungskabel (66) vorhanden ist, das elektrisch mit den Stromkreisen verbunden ist.

8. Selbsteinstellendes Einbaulager nach Patentanspruch 4, dahingehend **gekennzeichnet,** dass das Schutzgehäuse (32) einen Nasenteil (34) besitzt, der radial über dem Außenring (22) verläuft, so dass der Nasenteil (34) dem flexiblen Leiter einen gewissen Schutz bietet.

9. Selbsteinstellendes Einbaulager nach Patentanspruch 1, dahingehend **gekennzeichnet,** dass die Abdichtungsvorrichtung (20) eine metallische Fassung (52) besitzt, die auf dem Außenring (22) montiert ist; und diese Metallfassung (52) eine Öffnung bildet, durch die der flexible elektrische Leiter führt und dass die Abdichtungsvorrichtung (20) ebenfalls einen Teil aus Elastomer aufweist, der die Metallfassung abdeckt und eine Abdichtungslippe (54) bildet, die in den Innenring (16) eingreift.

10. Selbsteinstellendes Einbaulager nach Patentanspruch 9, dahingehend **gekennzeichnet,** dass außerdem ein Käfig aus Polymermaterial (58) vorhanden ist, der auf der in der Metallfassung (52) praktizierten Öffnung und mindestens einem Teil des Messfühlers gegossen ist, so dass der Käfig aus Polymermaterial (58) den Messfühler stabilisiert.

11. Selbsteinstellendes Einbaulager nach Patentanspruch 1, dahingehend **gekennzeichnet,** dass der Messfühler (18) mindestens ein Bauteil mit Halleffekt (50) besitzt.

12. Selbsteinstellendes Einbaulager nach Patentanspruch 1, dahingehend **gekennzeichnet,** dass das Lagergehäuse (26 oder 28) ein Gehäuse vom Stehlagertyp (26) ist mit einem zentralen Bügel, der als Bohrung dient und zwei Befestigungsteile aufweist, die zur Befestigung des Lagers (26) ab dem zentralen Bügelteil nach Außen verlaufen, so dass die Bohrung (24) parallel zu einer Auflagefläche ausgerichtet ist.

13. Selbsteinstellendes Einbaulager nach Patentanspruch 1, dahingehend **gekennzeichnet,** dass das Lagergehäuse (26 oder 28) ein Gehäuse vom Flanschlagertyp (28) ist mit einem zentralen Teil, der als Bohrung dienen kann und mindestens zwei Befestigungsteile aufweist, dies zur Befestigung des Lagers (28) ab dem zentralen Teil nach Außen verlaufen, so dass die Bohrung (24) transversal zu einer Auflagefläche ausgerichtet ist.

14. Selbsteinstellendes Einbaulager nach Patentanspruch 1, dahingehend **gekennzeichnet,** dass das Messfühler-Target (14) einen magnetischen Ring besitzt, der auf einer auf dem Innenring (16) montierten Metallfassung (60) befestigt ist.

15. Selbsteinstellendes Einbaulager nach Patentanspruch 1, dahingehend **gekennzeichnet,** dass darüber hinaus zwischen dem Innenring (16) und dem Außenring (22) positionierte Wälzelemente vorhanden sind.

## Claims

1. A housed, self-aligning bearing comprising :
a housing (26 or 28) having a bore (24) along an axis;
an inner ring (16) and an outer ring (22) rotatable with respect to the inner ring (16), the outer ring (22) having a spherically convex outer surface mounted within the bore (24) of the housing (26) such that the outer ring may be misaligned with respect to the axis of the bore;
a sensor target (14) mounted on the inner ring (16);
a seal (20) mounted on the outer ring (22),
A sensor (18) mounted on the seal (20) and in proximity to the target;
and
at least one flexible electrical conductor electrically connected to the sensor (18) for transmitting signals from the sensor (18), a portion of the flexible electrical conductor being fixed to the housing (26 or 28).

2. The housed, self-aligning bearing according to claim 1, wherein the flexible conductor is provided by a flexible circuit board.

3. The housed, self-aligning bearing according to claim 2, wherein the flexible circuit board conductor includes electrical circuitry.

4. The housed, self-aligning bearing according to claim 1, further comprising a protective box (32) fixed to the housing (26 or 28) and providing protection for the flexible conductor and fixing of the flexible conductor with respect to the housing.

5. The housed, self-aligning bearing according to claim 4, wherein the protective box (32) includes circuitry electrically connected to the flexible conductor.

6. The housed, self-aligning bearing according to claim 4, further comprising a transmission cable (66) electrically connected to the flexible conductor.

7. The housed, self-aligning bearing according to claim 5, further comprising a transmission cable electrically (66) connected to the circuitry.

8. The housed, self-aligning bearing according to claim 4, wherein the protective box (32) includes a snout portion (34) extending radially over the outer ring such that the snout portion provides some protection for the flexible conductor.

9. The housed, self-aligning bearing according to claim 1, wherein the seal (20) includes a metal reinforcement portion (52) mounted on the outer ring (22), the metal reinforcement portion (52) providing an opening through which the flexible electrical conductor passes, and wherein the seal (20) also includes an elastomeric portion overlying the metal reinforcement portion (52) providing a seal lip (54) engaging the inner ring (16).

10. The housed, self-aligning bearing according to claim 9, further comprising a polymer cap (58) molded over the opening in the metal reinforcement portion (52) and at least a portion of the sensor such that the polymer cap (58) stabilizes the sensor.

11. The housed, self-aligning bearing according to claim 1, wherein the sensor (18) includes at least one Hall-effect device (50).

12. The housed, self-aligning bearing according to claim 1, wherein the housing (26 or 28) is a pillow block type bearing housing (26) with a central bight portion providing the bore and with two mounting portions extending outwardly from the central bight portion for mounting the housing (26) such that the bore (24) is aligned parallel to a support surface.

13. The housed, self-aligning bearing according to claim 1, wherein the housing (26 or 28) is a flange type bearing housing (28) with a central portion providing the bore and with at least two mounting portions extending outwardly from the central portion for mounting the housing (28) such that the bore (24) is aligned perpendicular to a support surface.

14. The housed, self-aligning bearing according to claim 1, wherein the sensor target (14) comprises a magnetic ring fixed to a metal reinforcement ring (60) that is mounted on the inner ring (16).

15. The housed, self-aligning bearing according to claim 1, further comprising rolling elements positioned between the inner ring (16) and the outer ring (22).
